# EUROPÄISCHE PATENTANMELDUNG

(11) **EP 4 318 245 A1**
(43) Veröffentlichungstag der Anmeldung: **07.02.2024**
(21) Anmeldenummer: 22196810.0
(22) Anmeldetag: 21.09.2022
(51) Int. Cl.: G06F 11/36

(54) **VERFAHREN UND SYSTEM ZUR ANALYSE VON TESTDURCHFÜHRUNGEN**

(30) Priorität: 01.08.2022 DE 102022119220
(71) Anmelder: dSPACE GmbH, 33102 Paderborn (DE)
(72) Erfinder: Timmermann, Robert, 33102 Paderborn (DE); Hammer, Jan Hendrik, 33102 Paderborn (DE); Göringer, Christian, 33102 Paderborn (DE)

(57) **Zusammenfassung**

Die Erfindung betrifft ein Verfahren zur Analyse von Testdurchführungen einer Vorrichtung (10a) und/oder Funktion (10b) zur zumindest teilweisen autonomen Führung eines Kraftfahrzeugs, mit einem Aggregieren (S4) des für jeden der Mehrzahl von Testfällen (T1) berechneten ersten Kennwerts (12) zu einem, einen Meta-Testfall (T2) repräsentierenden zweiten Kennwert (16); und einem Bewerten (S5) des zweiten Kennwerts (16) unter Verwendung eines vorgegebenen zweiten Kriteriums (18) und durch logisches Verknüpfen der ersten Bewertungsergebnisse (14a) der Mehrzahl von Testfällen (T1) zu einem zweiten Bewertungsergebnis (18a) des Meta-Testfalls (T2). Des Weiteren betrifft die Erfindung ein System (1) zur Analyse von Testdurchführungen einer Vorrichtung (10a) und/oder Funktion (10b) zur zumindest teilweisen autonomen Führung eines Kraftfahrzeugs.

## Beschreibung

Die vorliegende Erfindung betrifft ein computerimplementiertes Verfahren zur Analyse von Testdurchführungen einer Vorrichtung und/oder Funktion zur zumindest teilweisen autonomen Führung eines Kraftfahrzeugs.

Die vorliegende Erfindung betrifft des Weiteren ein System zur Analyse von Testdurchführungen einer Vorrichtung und/oder Funktion zur zumindest teilweisen autonomen Führung eines Kraftfahrzeugs.

Darüber hinaus betrifft die Erfindung ein Computerprogramm mit Programmcode, um das erfindungsgemäße Verfahren durchzuführen.

### Stand der Technik

Fahrassistenzsysteme wie z.B. ein adaptiver Geschwindigkeitsregler und/oder Funktionen für das hochautomatisierte Fahren können mithilfe diverser Überprüfungsmethoden verifiziert bzw. validiert werden.

Dabei kann beispielsweise Data Replay Testing bzw. Datenwiedergabe-Testen verwendet werden.

Data Replay Testing ist eine Open-Loop-Testmethodik, die auf der Wiedergabe von aufgezeichneten Datensätzen an den Schnittstellen eines zu testenden Systems und der Bewertung der Reaktionen des zu testenden Systems im Vergleich zu Referenz- oder Ground-Truth-Daten basiert.

Eine solche Testmethodik kann auf mehreren Testplattformen eingesetzt werden, sei es als Software Data Replay oder als Hardware Data Replay.

Der Test beginnt mit der Definition der Anforderungen. In dieser Phase wird ein Umfang der Data Replay-Testkampagne sowie Erfolgs- und Fehlerkriterien des zu testenden Systems, z.B. ein Prozentsatz positiver Objekterkennungen festgelegt.

Die Ergebnisse des Tests werden in einem Testbericht mit allen angehängten Testergebnis-Artefakten, wie z.B. den Ausführungsprotokolldaten, einschließlich der Test-Metadaten, dargestellt. Darüber hinaus ermöglicht ein Vorschautool das Debugging von Tests, wenn ein Testfehler vorliegt.

In der Regel können Testergebnisse jedoch eine Vielzahl von Testfällen bzw. Testsequenzen aufweisen, welche zu logischen Testfällen und diese wiederum zu Test-Suiten zusammengefasst sind.

Dies macht es für einen Nutzer schwierig bzw. ineffizient, eine Beurteilung von Testergebnisse vornehmen zu können. Ferner ist der Nutzer nicht nur an der Information interessiert, ob eine getestete Fahrzeugfunktion den Test erfolgreich absolvierte oder nicht, sondern darüber hinaus Fehlerursachen zu identifizieren.

Demzufolge besteht ein Bedarf, bestehende Testverfahren zur Analyse von Testdurchführungen einer Vorrichtung und/oder Funktion zur zumindest teilweisen autonomen Führung eines Kraftfahrzeugs dahingehend zu verbessern, dass zum einen eine effiziente Testbeurteilung ermöglicht wird und zum anderen, dass in nachfolgenden Tests eine die identifizierten Fehler umfassende Untermenge von Sensordaten getestet werden kann, um eine zukünftig effizientere Testausführung zu ermöglichen.

Es ist daher Aufgabe der Erfindung, ein Verfahren und System zur Analyse von Testdurchführungen einer Vorrichtung und/oder Funktion zur zumindest teilweisen autonomen Führung eines Kraftfahrzeugs bereitzustellen, welche eine vereinfachte Datenauswertung sowie unter Verwendung identifizierter Testfehler eine zukünftig effizientere Testausführung zu ermöglichen.

### Offenbarung der Erfindung

Die Aufgabe wird erfindungsgemäß durch ein computerimplementiertes Verfahren zur Analyse von Testdurchführungen einer Vorrichtung und/oder Funktion zur zumindest teilweisen autonomen Führung eines Kraftfahrzeugs mit den Merkmalen des Patentanspruchs 1 gelöst.

Die Aufgabe wird erfindungsgemäß des Weiteren durch ein System zur Analyse von Testdurchführungen einer Vorrichtung und/oder Funktion zur zumindest teilweisen autonomen Führung eines Kraftfahrzeugs mit den Merkmalen des Patentanspruchs 14 gelöst.

Die Aufgabe wird erfindungsgemäß ferner durch ein Computerprogramm mit Programmcode, um das erfindungsgemäße Verfahren durchzuführen, mit den Merkmalen des Patentanspruchs 15 gelöst.

Die Erfindung betrifft ein computerimplementiertes Verfahren zur Analyse von Testdurchführungen einer Vorrichtung und/oder Funktion zur zumindest teilweisen autonomen Führung eines Kraftfahrzeugs.

Das Verfahren umfasst ein Bereitstellen vorerfasster, eine Mehrzahl von Testfällen repräsentierenden, Sensordaten einer Fahrzeugumgebung und/oder fahrzeugbezogener Parameter.

Des Weiteren umfasst das Verfahren ein Berechnen zumindest eines, eine Leistung einer getesteten Vorrichtung und/oder Funktion zur zumindest teilweisen autonomen Führung des Kraftfahrzeugs repräsentierenden ersten Kennwerts für jeden der Mehrzahl von Testfällen sowie ein Bewerten des ersten Kennwerts jeder der Mehrzahl von Testfällen unter Verwendung eines vorgegebenen ersten Kriteriums zu einem ersten Bewertungsergebnis, d.h. dass die Bewertung das erste Bewertungsergebnis liefert.

Das Verfahren umfasst ferner ein Aggregieren des für jeden der Mehrzahl von Testfällen berechneten ersten Kennwerts zu einem, einen Meta-Testfall repräsentierenden zweiten Kennwert sowie ein Bewerten des zweiten Kennwerts unter Verwendung eines vorgegebenen zweiten Kriteriums und durch logisches Verknüpfen der ersten Bewertungsergebnisse der Mehrzahl von Testfällen zu einem zweiten Bewertungsergebnis des Meta-Testfalls, d.h. dass die Bewertung das zweite Bewertungsergebnis liefert.

Die Erfindung betrifft ferner ein System zur Analyse von Testdurchführungen einer Vorrichtung und/oder Funktion zur zumindest teilweisen autonomen Führung eines Kraftfahrzeugs.

Das System umfasst einen Datenspeicher, welcher dazu eingerichtet ist, vorerfasste, eine Mehrzahl von Testfällen repräsentierende, Sensordaten einer Fahrzeugumgebung und/oder fahrzeugbezogener Parameter bereitzustellen.

Das System umfasst des Weiteren eine Berechnungseinrichtung, welche dazu eingerichtet ist, zumindest einen, eine Leistung einer getesteten Vorrichtung und/oder Funktion zur zumindest teilweisen autonomen Führung des Kraftfahrzeugs repräsentierenden ersten Kennwert für jeden der Mehrzahl von Testfällen zu berechnen sowie eine erste Bewertungseinrichtung, welche dazu eingerichtet ist, den ersten Kennwert jeder der Mehrzahl von Testfällen unter Verwendung eines vorgegebenen ersten Kriteriums zu einem ersten Bewertungsergebnis zu bewerten.

Ferner umfasst das System eine Aggregierungseinrichtung, welche dazu eingerichtet ist, den für jeden der Mehrzahl von Testfällen berechneten ersten Kennwert zu einem, einen Meta-Testfall repräsentierenden zweiten Kennwert zu aggregieren und eine zweite Bewertungseinrichtung, welche dazu eingerichtet ist, den zweiten Kennwert unter Verwendung eines vorgegebenen zweiten Kriteriums und durch logisches Verknüpfen der ersten Bewertungsergebnisse der Mehrzahl von Testfällen zu einem zweiten Bewertungsergebnis des Meta-Testfalls zu bewerten.

Die Erfindung betrifft des Weiteren ein Computerprogramm mit Programmcode, um das erfindungsgemäße Verfahren durchzuführen, wenn das Computerprogramm auf einem Computer ausgeführt wird.

Das Computerprogramm kann beispielsweise auf einem Cloud-Server ausgeführt werden. Alternativ ist z.B. eine verteilte Ausführung auf einer Mehrzahl von Servern wie beispielsweise on-premise-, Edge- und/oder Cloud-Servern möglich.

Der Fahrzeugsensor ist beispielsweise ein Kamerasensor, ein Radarsensor, ein LiDAR-Sensor, ein Ultraschallsensor, ein Infrarotsensor, ein Reifendrucksensor, ein Raddrehzahlsensor und/oder ein GNSS-Sensor, insbesondere ein GPS-Sensor.

Die Funktion zur zumindest teilweisen autonomen Führung eines Kraftfahrzeugs ist beispielsweise eine Objekterkennung, ein adaptiver Tempomat, ein Spurhalteassistent, ein aktiver Bremsassistent und/oder ein Parkassistent.

Ein Fehler der Funktion zur zumindest teilweisen autonomen Führung eines Kraftfahrzeugs liegt z.B. dann vor, wenn im Rahmen einer Verkehrszeichenerkennung eine Bounding-Box nicht gemäß einer zugrundeliegenden Anforderung gesetzt oder ein Verkehrszeichen nicht erfasst wurde.

Die Mehrzahl von Testfällen können zumindest eine oder mehrere unterschiedliche Testarten wie beispielsweise Szenario-basiertes Testen oder Step- bzw. Schrittbasiertes Testen umfassen.

Eine Idee der vorliegenden Erfindung ist es, durch das Aggregieren des für jeden der Mehrzahl von Testfällen berechneten ersten Kennwerts zu einem, einen Meta-Testfall repräsentierenden zweiten Kennwert einen die Testergebnisse der Ebene konkreter Testfälle bewertenden Kennwert bereitzustellen.

Damit erhält der Nutzer die Möglichkeit, effizienter zu identifizieren, welche der Mehrzahl von Testfällen entsprechende Testanforderungen nicht erfüllt hat.

Durch das Bewerten des zweiten Kennwerts unter Verwendung eines vorgegebenen zweiten Kriteriums und durch logisches Verknüpfen der ersten Bewertungsergebnisse der Mehrzahl von Testfällen zu einem zweiten Bewertungsergebnis des Meta-Testfalls kann ferner beurteilt werden, ob die Mehrzahl von Testfällen insgesamt bzw. aggregiert die entsprechende Testanforderungen erfüllt haben.

Auf Grundlage der vorstehend genannten Bewertung auf der Ebene des Meta-Testfalls kann somit in vorteilhafter Weise ermöglicht werden, dass in nachfolgenden Tests eine die identifizierten Fehler umfassende Untermenge der Sensordaten getestet werden kann. Dies wiederum begünstigt eine zukünftig effizientere Testausführung.

Weitere Ausführungsformen der vorliegenden Erfindung sind Gegenstand der weiteren Unteransprüche und der nachfolgenden Beschreibung unter Bezugnahme auf die Figuren.

Gemäß einer bevorzugten Weiterbildung der Erfindung ist vorgesehen, dass der zweite Kennwert unter Verwendung einer Mehrzahl erster Kennwerte jedem der Testfälle und einem, jedem Testfall zugeordneten Normierungswert, insbesondere eine durch das Kraftfahrzeug zurückgelegte Distanz oder einen, eine durch das Kraftfahrzeug zurückgelegte Distanz repräsentierenden Faktor, berechnet wird.

Der Normierungswert sorgt in vorteilhafter Weise dafür, dass bei Bewertung der Mehrzahl konkreter Testfälle die Tatsache berücksichtigt wird, welche Distanz das getestete Fahrzeug in jedem einzelnen Testfall zurückgelegt hat.

Gemäß einer weiteren bevorzugten Weiterbildung der Erfindung ist vorgesehen, dass der zweite Kennwert durch Anwenden zumindest eines statistischen Verfahrens, insbesondere Minimum-, Maximum- oder Medianbildung, auf die Mehrzahl erster Kennwerte jeder der Testfälle und dem jedem Testfall zugeordneten Normierungswert berechnet wird.

Somit kann beispielsweise identifiziert werden, welche der Mehrzahl von Testfällen die Anforderung erfüllt haben und welche der Mehrzahl von Testfällen am besten und/oder am schlechtesten abgeschnitten haben.

Gemäß einer weiteren bevorzugten Weiterbildung der Erfindung ist vorgesehen, dass das erste Kriterium durch einen ersten Schwellwert gegeben ist, wobei der erste Kennwert für jeden der Mehrzahl von Testfällen mit dem ersten Schwellwert verglichen wird, und wobei ein Bestimmen einer Erfüllung oder nicht-Erfüllung einer an die Vorrichtung und/oder Funktion zur zumindest teilweisen autonomen Führung des Kraftfahrzeugs gerichteten Anforderung unter Verwendung eines Vergleichsergebnisses durchgeführt wird.

Somit kann eine objektive Bewertung einer Anforderungserfüllung der Vorrichtung und/oder Funktion zur zumindest teilweisen autonomen Führung des Kraftfahrzeugs auf der Testfall-Ebene ermöglicht werden.

Gemäß einer weiteren bevorzugten Weiterbildung der Erfindung ist vorgesehen, dass das zweite Kriterium durch einen zweiten Schwellwert gegeben ist, wobei der zweite Kennwert für den Meta-Testfall mit dem zweiten Schwellwert verglichen wird, und wobei ein Bestimmen einer Erfüllung oder nicht-Erfüllung einer an den Meta-Testfall gerichteten Anforderung unter Verwendung eines Vergleichsergebnisses und dem logischen Verknüpfen der ersten Bewertungsergebnisse der Mehrzahl von Testfällen durchgeführt wird.

Somit kann eine objektive Bewertung einer Anforderungserfüllung der Vorrichtung und/oder Funktion zur zumindest teilweisen autonomen Führung des Kraftfahrzeugs auf der Meta-Testfall-Ebene ermöglicht werden.

Gemäß einer weiteren bevorzugten Weiterbildung der Erfindung ist vorgesehen, dass der Meta-Testfall eine Mehrzahl von Testfällen ähnlicher Art, insbesondere bei ähnlichen Umweltbedingungen und/oder ähnlichen Verkehrsbedingungen aufgezeichnete Sensordaten umfassende Testfälle, repräsentiert.

Testfälle ähnlicher Art umfassen z.B. bei ähnlichen Bedingungen aufgezeichnete Daten bzw. Testfälle, die einem spezifischen Cluster zuordbar sind bzw. eine bestimmbare Übereinstimmung von Testmerkmalen aufweisen.

Ähnliche Umweltbedingungen können beispielsweise durch Testfahrten bzw. Aufnahmen bei Nacht, bei Regen, bei Gegenlicht, etc. gebildet werden. Ähnliche Verkehrsbedingungen können beispielsweise durch Autobahnfahrten, Überlandfahrten, Stadtfahrten und/oder Fahrten bei ähnlichem Verkehrsaufkommen gebildet werden.

Der Meta-Testfall kann somit in vorteilhafter Weise Mehrzahl konkreter Testfälle umfassen, deren zugrunde liegende Sensordaten bei ähnlichen Umweltbedingungen und/oder ähnlichen Verkehrsbedingungen aufgezeichnet wurden.

Gemäß einer weiteren bevorzugten Weiterbildung der Erfindung ist vorgesehen, dass die getestete Vorrichtung und/oder Funktion zur zumindest teilweisen autonomen Führung des Kraftfahrzeugs eine Objekterkennung und/oder eine Fahrzeugführung ist. Somit kann in der Weise eine Bewertung der Leistungsfähigkeit der getesteten Vorrichtung und/oder Funktion ermöglicht werden.

Gemäß einer weiteren bevorzugten Weiterbildung der Erfindung ist vorgesehen, dass ein dritter Kennwert unter Verwendung einer Mehrzahl zweiter Kennwerte jedem der Meta-Testfälle berechnet wird.

Der dritte Kennwert bezieht sich dabei auf eine Mehrzahl von Meta-Testfällen, insbesondere einer Test-Suite. Dies ermöglicht eine Bewertung einer Anforderungserfüllung der von der Test-Suite umfassten Meta-Testfälle.

Gemäß einer weiteren bevorzugten Weiterbildung der Erfindung ist vorgesehen, dass ein drittes Kriterium durch einen dritten Schwellwert gegeben ist, wobei der dritte Kennwert für eine, eine Mehrzahl von Meta-Testfällen aufweisende Test-Suite mit dem dritten Schwellwert verglichen wird, und wobei ein Bestimmen einer Erfüllung oder nicht-Erfüllung einer an die Test-Suite gerichteten Anforderung unter Verwendung eines Vergleichsergebnisses und dem logischen Verknüpfen der zweiten Bewertungsergebnisse der Mehrzahl von Meta-Testfällen durchgeführt wird.

Somit kann eine objektive Bewertung einer Anforderungserfüllung der Vorrichtung und/oder Funktion zur zumindest teilweisen autonomen Führung des Kraftfahrzeugs auf der Test-Suite-Ebene ermöglicht werden.

Gemäß einer weiteren bevorzugten Weiterbildung der Erfindung ist vorgesehen, dass der erste Kennwert durch Vergleichen von Ground-Truth-Daten, mit den vorerfassten, eine Mehrzahl von Testfällen repräsentierenden, Sensordaten der Fahrzeugumgebung und/oder fahrzeugbezogener Parameter bestimmt wird.

Somit können Funktionen wie beispielsweise eine Objekterkennung, deren Testung dem Vergleich mit Ground-Truth-Daten bedarf, bewertet werden.

Gemäß einer weiteren bevorzugten Weiterbildung der Erfindung ist vorgesehen, dass der erste Kennwert der vorerfassten, eine Mehrzahl von Testfällen repräsentierenden, Sensordaten der Fahrzeugumgebung und/oder fahrzeugbezogener Parameter mit einem vierten Schwellwert bestimmt wird.

Somit können Aspekte wie beispielsweise ein Fahrkomfort, deren Testung einem Vergleich der Messwerte mit einen vorgegebenen Schwellwert bedarf, bewertet werden.

Gemäß einer weiteren bevorzugten Weiterbildung der Erfindung ist vorgesehen, dass jeder Testfall eine Mehrzahl von Testsequenzen, insbesondere Einzelbilder und/oder Messzeitreihen aufweist. Jede der Einzelbilder und/oder Messzeitreihen kann in vorteilhafter Weise durch eine Kennzahl bewertet werden

Gemäß einer weiteren bevorzugten Weiterbildung der Erfindung ist vorgesehen, dass ein Parameterraum für einen virtuellen Test der Vorrichtung und/oder Funktion zur zumindest teilweisen autonomen Führung eines Kraftfahrzeugs unter Verwendung der Bewertung des zweiten Kennwerts der Mehrzahl von Testfällen bestimmt wird.

Hierdurch können nachfolgende Verfahren zielgerichteter und effizienter gestaltet werden, da diese somit speziell auf die identifizierten Testfehler gerichtet werden können.

Die hierin beschriebenen Merkmale des Verfahrens zur Analyse von Testdurchführungen einer Vorrichtung und/oder Funktion zur zumindest teilweisen autonomen Führung eines Kraftfahrzeugs sind ebenso auf das erfindungsgemäße System zur Analyse von Testdurchführungen einer Vorrichtung und/oder Funktion zur zumindest teilweisen autonomen Führung eines Kraftfahrzeugs und umgekehrt anwendbar.

### Kurze Beschreibung der Zeichnungen

Zum besseren Verständnis der vorliegenden Erfindung und ihrer Vorteile wird nun auf die nachfolgende Beschreibung in Verbindung mit den zugehörigen Zeichnungen verwiesen.

Nachfolgend wird die Erfindung anhand exemplarischer Ausführungsformen näher erläutert, die in den schematischen Abbildungen der Zeichnungen angegeben sind.

Es zeigen:
- Fig. 1: ein Ablaufdiagramm eines Verfahrens zur Analyse von Testdurchführungen einer Vorrichtung und/oder Funktion zur zumindest teilweisen autonomen Führung eines Kraftfahrzeugs gemäß einer bevorzugten Ausführungsform der Erfindung; und

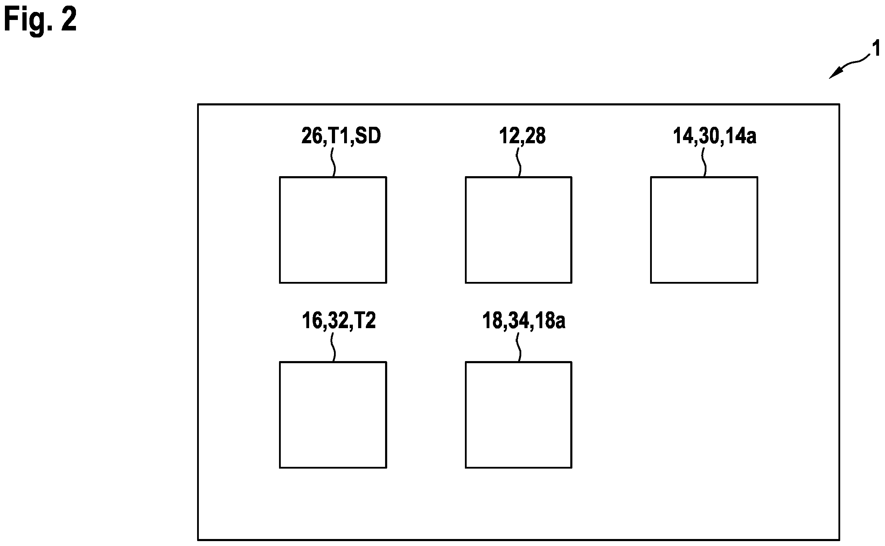

- Fig.2: eine schematische Darstellung eines Systems zur Analyse von Testdurchführungen einer Vorrichtung und/oder Funktion zur zumindest teilweisen autonomen Führung eines Kraftfahrzeugs gemäß der bevorzugten Ausführungsform der Erfindung.

Sofern nicht anders angegeben, bezeichnen gleiche Bezugszeichen gleiche Elemente der Zeichnungen.

### Ausführliche Beschreibung der Ausführungsformen

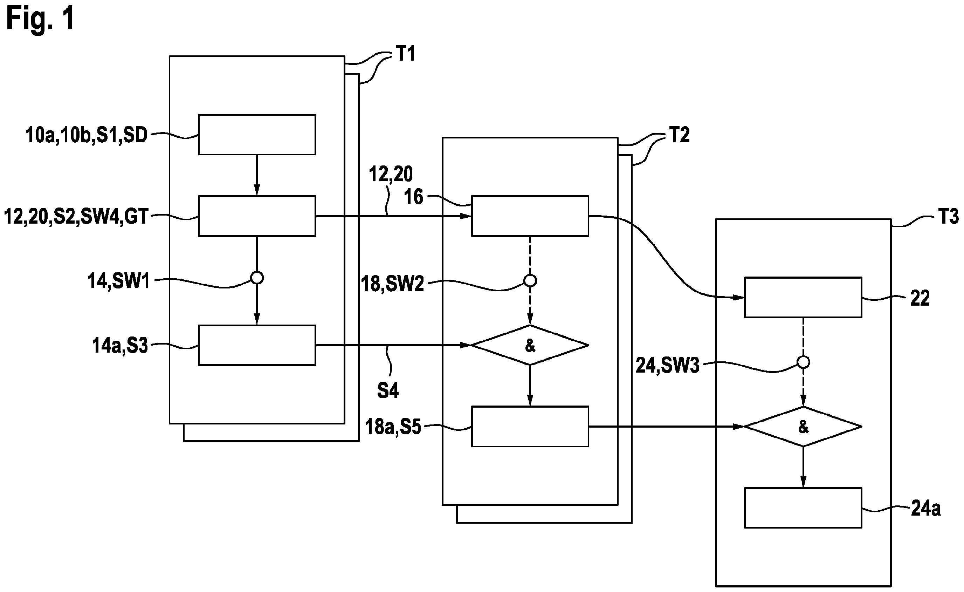

Das in Fig. 1 gezeigte Verfahren umfasst ein Bereitstellen S1 vorerfasster, eine Mehrzahl von Testfällen T1 repräsentierenden, Sensordaten SD, insbesondere eines Fahrzeugsensors, einer Fahrzeugumgebung und/oder fahrzeugbezogener Parameter.

Des Weiteren umfasst das Verfahren ein Berechnen S2 zumindest eines, eine Leistung einer getesteten Vorrichtung 10a und/oder Funktion 10b zur zumindest teilweisen autonomen Führung des Kraftfahrzeugs repräsentierenden ersten Kennwerts 12 für jeden der Mehrzahl von Testfällen T1 sowie ein Bewerten S3 des ersten Kennwerts 12 jeder der Mehrzahl von Testfällen T1 unter Verwendung eines vorgegebenen ersten Kriteriums 14 zu einem ersten Bewertungsergebnis 14a.

Darüber hinaus umfasst das Verfahren ein Aggregieren S4 des für jeden der Mehrzahl von Testfällen T1 berechneten ersten Kennwerts 12 zu einem, einen Meta-Testfall T2 repräsentierenden zweiten Kennwert 16 und ein Bewerten S5 des zweiten Kennwerts 16 unter Verwendung eines vorgegebenen zweiten Kriteriums 18 und durch logisches Verknüpfen der ersten Bewertungsergebnisse 14a der Mehrzahl von Testfällen T1 zu einem zweiten Bewertungsergebnis 18a des Meta-Testfalls T2.

Der zweite Kennwert 16 wird dabei unter Verwendung einer Mehrzahl erster Kennwerte 12 jedem der Testfälle und einem, jedem Testfall zugeordneten Normierungswert 20, insbesondere eine durch das Kraftfahrzeug zurückgelegte Distanz oder einen, eine durch das Kraftfahrzeug zurückgelegte Distanz repräsentierenden Faktor, berechnet.

Der zweite Kennwert 16 wird ferner durch Anwenden zumindest eines statistischen Verfahrens, insbesondere Minimum-, Maximum- oder Medianbildung, auf die Mehrzahl erster Kennwerte 12 jeder der Testfälle T1 und dem jedem Testfall T1 zugeordneten Normierungswert 20 berechnet.

Das erste Kriterium 14 ist durch einen ersten Schwellwert SW1 gegeben. Der erste Kennwert 12 wird für jeden der Mehrzahl von Testfällen T1 mit dem ersten Schwellwert SW1 verglichen. Ein Bestimmen einer Erfüllung oder nicht-Erfüllung einer an die Vorrichtung 10a und/oder Funktion 10b zur zumindest teilweisen autonomen Führung des Kraftfahrzeugs gerichteten Anforderung wird hierbei unter Verwendung eines Vergleichsergebnisses durchgeführt.

Das zweite Kriterium 18 ist durch einen zweiten Schwellwert SW2 gegeben. Der zweite Kennwert 16 wird für den Meta-Testfall T2 mit dem zweiten Schwellwert SW2 verglichen. Ein Bestimmen einer Erfüllung oder nicht-Erfüllung einer an den Meta-Testfall T2 gerichteten Anforderung wird dabei unter Verwendung eines Vergleichsergebnisses und dem logischen Verknüpfen der ersten Bewertungsergebnisse 14a der Mehrzahl von Testfällen T1 durchgeführt. Das logische Verknüpfung ist dabei eine UND-Verknüpfung.

Der Meta-Testfall T2 repräsentiert eine Mehrzahl von Testfällen T1 ähnlicher Art, insbesondere bei ähnlichen Umweltbedingungen und/oder ähnlichen Verkehrsbedingungen aufgezeichnete Sensordaten umfassende Testfälle. Die getestete Vorrichtung 10a und/oder Funktion 10b zur zumindest teilweisen autonomen Führung des Kraftfahrzeugs ist eine Objekterkennung und/oder eine Fahrzeugführung.

Alternativ können beispielsweise anderen Funktionen 10b und/oder Fahrparameter wie beispielsweise ein Fahrkomfort unter Verwendung von Messdaten einer Vertikalbeschleunigung, welche mit einem Referenzwert bzw. Schwellwert vergleichbar ist, getestet werden.

Ein dritter Kennwert 22 wird unter Verwendung einer Mehrzahl zweiter Kennwerte 16 jedem der Meta-Testfälle berechnet. Ein drittes Kriterium 24 ist durch einen dritten Schwellwert SW3 gegeben. Der dritte Kennwert 22 wird für eine, eine Mehrzahl von Meta-Testfällen aufweisende Test-Suite T3 mit dem dritten Schwellwert SW3 verglichen. Ein Bestimmen einer Erfüllung oder nicht-Erfüllung einer an die Test-Suite T3 gerichteten Anforderung wird dabei unter Verwendung eines Vergleichsergebnisses und dem logischen Verknüpfen der zweiten Bewertungsergebnisse 18a der Mehrzahl von Meta-Testfällen durchgeführt. Hierdurch ergibt sich ein drittes Bewertungsergebnis 24a.

Der erste Kennwert 12 wird ferner durch Vergleichen von Ground-Truth-Daten GT, mit den vorerfassten, eine Mehrzahl von Testfällen T1 repräsentierenden, Sensordaten SD der Fahrzeugumgebung und/oder fahrzeugbezogener Parameter bestimmt.

Alternativ kann der erste Kennwert 12 der vorerfassten, eine Mehrzahl von Testfällen T1 repräsentierenden, Sensordaten SD der Fahrzeugumgebung und/oder fahrzeugbezogener Parameter mit einem vierten Schwellwert SW4 bestimmt wird.

Jeder Testfall weist hierbei eine Mehrzahl von Testsequenzen, insbesondere Einzelbilder und/oder Messzeitreihen auf.

Ein Parameterraum für einen virtuellen Test der Vorrichtung 10a und/oder Funktion 10b zur zumindest teilweisen autonomen Führung eines Kraftfahrzeugs wird ferner unter Verwendung der Bewertung des zweiten Kennwerts 16 der Mehrzahl von Testfällen T1 bestimmt.

Obwohl hierin spezifische Ausführungsformen illustriert und beschrieben wurden, ist es dem Fachmann verständlich, dass eine Vielzahl von alternativen und/oder äquivalenten Implementierungen existieren. Es sollte beachtet werden, dass die beispielhafte Ausführungsform oder beispielhaften Ausführungsformen nur Beispiele sind und nicht dazu dienen, den Umfang, die Anwendbarkeit oder die Konfiguration in irgendeiner Weise einzuschränken.

Vielmehr liefert die vorstehend genannte Zusammenfassung und ausführliche Beschreibung dem Fachmann eine bequeme Anleitung zur Implementierung zumindest einer beispielhaften Ausführungsform, wobei verständlich ist, dass verschiedene Änderungen im Funktionsumfang und der Anordnung der Elemente vorgenommen werden können, ohne vom Umfang der beigefügten Ansprüche und ihrer rechtlichen Äquivalente abzuweichen.

Im Allgemeinen beabsichtigt diese Anmeldung, Änderungen bzw. Anpassungen oder Variationen der hierin dargestellten Ausführungsformen abzudecken. Beispielsweise kann eine Reihenfolge der Verfahrensschritte abgeändert werden. Das Verfahren kann ferner zumindest abschnittsweise sequentiell oder parallel durchgeführt werden.

### Bezugszeichenliste

- 1: System
- 10a: Vorrichtung
- 10b: Funktion
- 12: erster Kennwert
- 14: erstes Kriterium
- 14a: erstes Bewertungsergebnis
- 16: zweiter Kennwert
- 18: zweites Kriterium
- 18a: zweites Bewertungsergebnis
- 20: Normierungswert
- 22: dritter Kennwert
- 24: drittes Kriterium
- 24a: drittes Bewertungsergebnis
- 26: Datenspeicher
- 28: Berechnungseinrichtung
- 30: erste Bewertungseinrichtung
- 32: Aggregierungseinrichtung
- 34: zweites Bewertungseinrichtung
- GT: Ground-Truth-Daten
- SD: Sensordaten
- SW1: erster Schwellwert
- SW2: zweiter Schwellwert
- SW3: dritter Schwellwert
- SW4: vierter Schwellwert
- T1: Testfälle
- T2: Meta-Testfall
- T3: Test-Suite
- S1-S5: Verfahrensschritte

## Patentansprüche

1. Computerimplementiertes Verfahren zur Analyse von Testdurchführungen einer Vorrichtung (10a) und/oder Funktion (10b) zur zumindest teilweisen autonomen Führung eines Kraftfahrzeugs, mit den Schritten:
Bereitstellen (S1) vorerfasster, eine Mehrzahl von Testfällen (T1) repräsentierenden, Sensordaten (SD) einer Fahrzeugumgebung und/oder fahrzeugbezogener Parameter;
Berechnen (S2) zumindest eines, eine Leistung einer getesteten Vorrichtung (10a) und/oder Funktion (10b) zur zumindest teilweisen autonomen Führung des Kraftfahrzeugs repräsentierenden ersten Kennwerts (12) für jeden der Mehrzahl von Testfällen (T1);
Bewerten (S3) des ersten Kennwerts (12) jeder der Mehrzahl von Testfällen (T1) unter Verwendung eines vorgegebenen ersten Kriteriums (14) zu einem ersten Bewertungsergebnis (14a);
Aggregieren (S4) des für jeden der Mehrzahl von Testfällen (T1) berechneten ersten Kennwerts (12) zu einem, einen Meta-Testfall (T2) repräsentierenden zweiten Kennwert (16);
Bewerten (S5) des zweiten Kennwerts (16) unter Verwendung eines vorgegebenen zweiten Kriteriums (18) und durch logisches Verknüpfen der ersten Bewertungsergebnisse (14a) der Mehrzahl von Testfällen (T1) zu einem zweiten Bewertungsergebnis (18a) des Meta-Testfalls (T2).

2. Computerimplementiertes Verfahren nach Anspruch 1, wobei der zweite Kennwert (16) unter Verwendung einer Mehrzahl erster Kennwerte (12) jedem der Testfälle (T1) und einem, jedem Testfall zugeordneten Normierungswert (20), insbesondere eine durch das Kraftfahrzeug zurückgelegte Distanz oder einen, eine durch das Kraftfahrzeug zurückgelegte Distanz repräsentierenden Faktor, berechnet wird.

3. Computerimplementiertes Verfahren nach Anspruch 2, wobei der zweite Kennwert (16) durch Anwenden zumindest eines statistischen Verfahrens, insbesondere Minimum-, Maximum- oder Medianbildung, auf die Mehrzahl erster Kennwerte (12) jeder der Testfälle (T1) und dem jedem Testfall (T1) zugeordneten Normierungswert (20) berechnet wird.

4. Computerimplementiertes Verfahren nach einem der vorhergehenden Ansprüche, wobei das erste Kriterium (14) durch einen ersten Schwellwert (SW1) gegeben ist, wobei der erste Kennwert (12) für jeden der Mehrzahl von Testfällen (T1) mit dem ersten Schwellwert (SW1) verglichen wird, und wobei ein Bestimmen einer Erfüllung oder nicht-Erfüllung einer an die Vorrichtung (10a) und/oder Funktion (10b) zur zumindest teilweisen autonomen Führung des Kraftfahrzeugs gerichteten Anforderung unter Verwendung eines Vergleichsergebnisses durchgeführt wird.

5. Computerimplementiertes Verfahren nach einem der vorhergehenden Ansprüche, wobei das zweite Kriterium (18) durch einen zweiten Schwellwert (SW2) gegeben ist, wobei der zweite Kennwert (16) für den Meta-Testfall (T2) mit dem zweiten Schwellwert (SW2) verglichen wird, und wobei ein Bestimmen einer Erfüllung oder nicht-Erfüllung einer an den Meta-Testfall (T2) gerichteten Anforderung unter Verwendung eines Vergleichsergebnisses und dem logischen Verknüpfen der ersten Bewertungsergebnisse (14a) der Mehrzahl von Testfällen (T1) durchgeführt wird.

6. Computerimplementiertes Verfahren nach einem der vorhergehenden Ansprüche, wobei der Meta-Testfall (T2) eine Mehrzahl von Testfällen (T1) ähnlicher Art, insbesondere bei ähnlichen Umweltbedingungen und/oder ähnlichen Verkehrsbedingungen aufgezeichnete Sensordaten umfassende Testfälle, repräsentiert.

7. Computerimplementiertes Verfahren nach einem der vorhergehenden Ansprüche, wobei die getestete Vorrichtung (10a) und/oder Funktion (10b) zur zumindest teilweisen autonomen Führung des Kraftfahrzeugs eine Objekterkennung und/oder eine Fahrzeugführung ist.

8. Computerimplementiertes Verfahren nach einem der vorhergehenden Ansprüche, wobei ein dritter Kennwert (22) unter Verwendung einer Mehrzahl zweiter Kennwerte (16) jedem der Meta-Testfälle (T2) berechnet wird.

9. Computerimplementiertes Verfahren nach Anspruch 8, wobei ein drittes Kriterium (24) durch einen dritten Schwellwert (SW3) gegeben ist, wobei der dritte Kennwert (22) für eine, eine Mehrzahl von Meta-Testfällen (T2) aufweisende Test-Suite (T3) mit dem dritten Schwellwert (SW3) verglichen wird, und wobei ein Bestimmen einer Erfüllung oder nicht-Erfüllung einer an die Test-Suite (T3) gerichteten Anforderung unter Verwendung eines Vergleichsergebnisses und dem logischen Verknüpfen der zweiten Bewertungsergebnisse (18a) der Mehrzahl von Meta-Testfällen (T2) durchgeführt wird.

10. Computerimplementiertes Verfahren nach einem der vorhergehenden Ansprüche, wobei der erste Kennwert (12) durch Vergleichen von Ground-Truth-Daten (GT), mit den vorerfassten, eine Mehrzahl von Testfällen (T1) repräsentierenden, Sensordaten (SD) der Fahrzeugumgebung und/oder fahrzeugbezogener Parameter bestimmt wird.

11. Computerimplementiertes Verfahren nach einem der Ansprüche 1 bis 9, wobei der erste Kennwert (12) der vorerfassten, eine Mehrzahl von Testfällen (T1) repräsentierenden, Sensordaten (SD) der Fahrzeugumgebung und/oder fahrzeugbezogener Parameter mit einem vierten Schwellwert (SW4) bestimmt wird.

12. Computerimplementiertes Verfahren nach einem der vorhergehenden Ansprüche, wobei jeder Testfall (T1) eine Mehrzahl von Testsequenzen, insbesondere Einzelbilder und/oder Messzeitreihen aufweist.

13. Computerimplementiertes Verfahren nach einem der vorhergehenden Ansprüche, wobei ein Parameterraum für einen virtuellen Test der Vorrichtung (10a) und/oder Funktion (10b) zur zumindest teilweisen autonomen Führung eines Kraftfahrzeugs unter Verwendung der Bewertung des zweiten Kennwerts (16) der Mehrzahl von Testfällen (T1) bestimmt wird.

14. System (1) zur Analyse von Testdurchführungen einer Vorrichtung (10a) und/oder Funktion (10b) zur zumindest teilweisen autonomen Führung eines Kraftfahrzeugs, mit:
einem Datenspeicher (26), welcher dazu eingerichtet ist, vorerfasste, eine Mehrzahl von Testfällen (T1) repräsentierende, Sensordaten (SD) einer Fahrzeugumgebung und/oder fahrzeugbezogener Parameter bereitzustellen;
einer Berechnungseinrichtung (28), welche dazu eingerichtet ist, zumindest einen, eine Leistung der getesteten Vorrichtung (10a) und/oder Funktion (10b) zur zumindest teilweisen autonomen Führung des Kraftfahrzeugs repräsentierenden ersten Kennwert (12) für jeden der Mehrzahl von Testfällen (T1) zu berechnen;
einer ersten Bewertungseinrichtung (30), welche dazu eingerichtet ist, den ersten Kennwert (12) jeder der Mehrzahl von Testfällen (T1) unter Verwendung eines vorgegebenen ersten Kriteriums (14) zu einem ersten Bewertungsergebnis (14a) zu bewerten;
einer Aggregierungseinrichtung (32), welche dazu eingerichtet ist, den für jeden der Mehrzahl von Testfällen (T1) berechneten ersten Kennwert (12) zu einem, einen Meta-Testfall (T2) repräsentierenden zweiten Kennwert (16) zu aggregieren; und
einer zweiten Bewertungseinrichtung (34), welche dazu eingerichtet ist, den zweiten Kennwert (16) unter Verwendung eines vorgegebenen zweiten Kriteriums (18) und durch logisches Verknüpfen der ersten Bewertungsergebnisse (14a) der Mehrzahl von Testfällen (T1) zu einem zweiten Bewertungsergebnis (18a) des Meta-Testfalls (T2) zu bewerten.

15. Computerprogramm mit Programmcode, um das Verfahren nach einem der Ansprüche 1 bis 13 durchzuführen, wenn das Computerprogramm auf einem Computer ausgeführt wird.
